# EUROPEAN PATENT APPLICATION

(11) **EP 1 426 333 A1**
(43) Date of publication of application: **09.06.2004**
(21) Application number: 02765489.6
(22) Date of filing: 11.09.2002
(51) Int. Cl.: C01B 31/02, B01J 20/20, H01M 8/04

(54) **SUBSTANCE OCCLUDING MATERIAL AND ELECTROCHEMICAL DEVICE USING IT, AND PRODUCTION METHOD FOR SUBSTANCE OCCLUDING MATERIAL**

(30) Priority: 11.09.2001 JP 2001275194; 18.12.2001 JP 2001384368
(71) Applicant: Sony Corporation, Tokyo 141-0001 (JP)
(72) Inventor: TAKENOBU, Taishi, c/o Sony Corporation, Tokyo 141-0001 (JP); SHIRAISHI, Masashi, c/o Sony Corporation, Tokyo 141-0001 (JP); YAMADA, Atsuo, c/o Sony Corporation, Tokyo 141-0001 (JP); KATAURA, Hiromichi, okyo Metropolitan Universty, Hachioji-shi, Tokyo 192-0397 (JP)
(74) Representative: Körber, Martin, Dipl.-Phys.
(86) International application number: PCT/JP2002/009277
(87) International publication number: WO 2003/029142

(57) **Abstract**

Disclosed are a substance-occluding material being high in efficiency, being lightweight, inexpensive and safe, and being high in transportability, an electrochemical device using the same, and a method of producing the substance-occluding material. A substance-occluding material wherein a substance, for example, a fullerene molecule (C₆₀), different from a substance to be occluded such as hydrogen gas is contained in the inside of a tubular material such as a carbon nanotube. A substance-occluding material wherein tubular materials such as carbon nanotubes or rod-like materials such as carbon nanofibers are densely bundled to form a bundle structure, and a substance to be occluded such as hydrogen gas is occluded between the tubular or rod-like materials. A substance-occluding material wherein a tubular material has a multi-wall structure, and a space portion for occluding a substance to be occluded is formed on the innermost side of the structure. A method of producing the substance-occluding material, including a step of treating the substance-occluding material with a base. An electrochemical device wherein a hydrogen-occluding material as the substance-occluding material according to the present invention is used.

## Description

### Technical Field

The present invention relates to a substance-occluding material, an electrochemical device using the same, and a method of producing the substance-occluding material.

### Background Art

Since the Industrial Revolution, fossil fuel such as gasoline and light oil has been widely used as energy source for automobiles and electric power generation. By utilization of fossil fuel, the humankind has greatly improved their living standard and developed various industries.

On the other hand, however, the consumption of fossil fuel has led to serious environmental disruption on a global scale, and a long-term stable supply of fossil fuel seems uncertain.

Meanwhile, hydrogen as a fuel has drawn attention as a substitute clean energy for the fossil fuel because of its merits such as generation of only water upon combustion. Now, attention is being paid to development of a material with which hydrogen can effectively be generated, stored, and easily transported.

Normally, hydrogen is stored by storage under high pressure, storage in a liquefied state, storage in a hydrogen-occluding alloy and the like methods. The storage under high pressure or in a liquefied state, however, involves the problems as to transportability, weight and the like arising from the container weight or the like. Besides, the storage in a hydrogen-occluding alloy has not been commercialized, because of its problems relating to weight, cost, and the like.

The present invention has been made in order to solve the above-mentioned problems. Accordingly, it is an object of the present invention to provide a substance-occluding material which is high in efficiency, is lightweight, inexpensive, and safe, and is high in transportability, an electrochemical device using the same, and a method of producing the substance-occluding material.

### Disclosure of Invention

The present invention pertains to a substance-occluding material wherein a substance different from a substance to be occluded is contained in a cylindrical material (this will hereinafter be referred to as the first-named invention of the present invention).

According to the present invention, since the substance different from the substance to be occluded is contained in the inside of the cylindrical material, it is possible to provide a substance-occluding material which is high in efficiency, is lightweight, inexpensive, and safe, and is high in transportability.

### Brief Description of Drawings

Figs. 1A and 1B are general sectional views of a peapod according to one embodiment of the present invention.
Figs. 2A and 2B are general illustrations of a single-wall carbon nanotube having a bundle structure according to one embodiment of the present invention.
Fig. 3 is a general sectional view of a double-wall carbon nanotube according to one embodiment of the present inventin.
Fig. 4 is a general sectional view of one example of a fuel cell according to one embodiment of the present invention.
Fig. 5 shows a Raman spectrum of the peapod according to the embodiment of the present invention.
Fig. 6 is a diagram showing the relationship between temperature and hydrogen-occluding ability of the single-wall carbon nanotube having the bundle structure according to the embodiment of the present invention.
Fig. 7 is a graph showing the relationships between the peapod and the diameter of single-wall carbon nanotube having the bundle structure and variations of an occluding space, according to the embodiment of the present invention.
Fig. 8 shows the diameter of a single-wall cabon nanotube as well as inter-wall distances of monolayer graphite, a graphite nanofiber, and a single-wall carbon nanotube, arranged in the order of size.
Fig. 9 is a TEM photograph of a carbon nanotube before treatment with an alkaline solution (NaOH), according to one embodiment of the present invention.
Fig. 10 is a TEM photograph of a carbon nanotube after treatment with an alkaline solution (NaOH), according to the embodiment of the present invention.
Fig. 11 is a Raman spectrum which comparingly shows the carbon nanotube before and after treatment with an alkaline solution (NaOH), according to the embodiment of the present invention.

### Best Mode for Carrying out the Invention.

The substance-occluding material according to the first-named invention of the present invention preferably has a structure in which a substance to be occluded is occluded in a space portion formed between the tubular material and the contained substance.

In addition, the substance to be occluded is desirably a gas, and, further, the gas is preferably hydrogen gas, nitrogen gas, or oxygen gas (this applies also to the inventions described later).

The tubular material is preferably constituted of a carbon nanotube, and the carbon nanotube is preferably a single-wall carbon nanotube.

As the contained substance, there may be preferably used a fullerene-based carbon material or a carbon atom-containing material such as nanographite.

The fullerene-based carbon material is not particularly limited inasmuch as it consists of shell-like carbon cluster molecules Cm (where m is a natural number suitable for Cm to form a shell-like structure). Normally, a simple substance of fullerene molecule selected from the group consisting of C₂₀, C₃₆, C₆₀, C₇₀, C₇₆, C₇₈, C₈₀, C₈₂, C₈₄, C₈₆, C₈₈, C₉₀, C₉₂, C₉₄, C₉₆ and the like, or a mixture of two or more thereof, is used.

These fullerene molecules were discovered in a mass analysis spectrum of cluster beams by laser ablation of carbon in 1985 (Kroto, H.W.; Heath , J.R.; O'brien, S.C.; Curl, R.F.; Smallery, R.E., Nature 1985. 318, 162). A method of producing these molecules was actually established after five years, and a method of producing these molecules by arc discharge of a carbon electrode was found out in 1990; since then, fullerenes have drawn attention as carbon-based semiconductor materials and the like.

Since the fullerene-based carbon materials are composed of carbon atoms, they are light in weight, are less liable to be denatured, and do not contain pollutants. The production cost of fullerenes has been rapidly decreasing. From resource, environmental and economical points of view, fullerenes are considered to be more ideal carbonaceous materials than any other material.

The above-mentioned carbon nanotube is a tubular molecule consisting only of carbon atoms which was discovered in 1991, and is expected as a hydrogen-occluding material in view of its lightness in weight and its structure.

However, hydrogen occlusion by use of the carbon nanotube alone is not easy to achieve, and high-performance results with this have not yet been reported notwithstanding the challenges by many research institutes.

Besides, hydrogen occlusion into other carbon materials have been studied vigorously because carbon is light in weight, is easy to obtain on a material basis and can be lowered in cost, but, again, favorable results have not yet been obtained actually.

The present inventors have made intensive and extensive studies for solving the above-mentioned problems. As a result of their studies, the present inventors have discovered that the size of a space portion possessed by a carbon material such as carbon nanotube has a great relationship with the ability of occluding the substance to be occluded such as hydrogen gas, and they have completed the present invention.

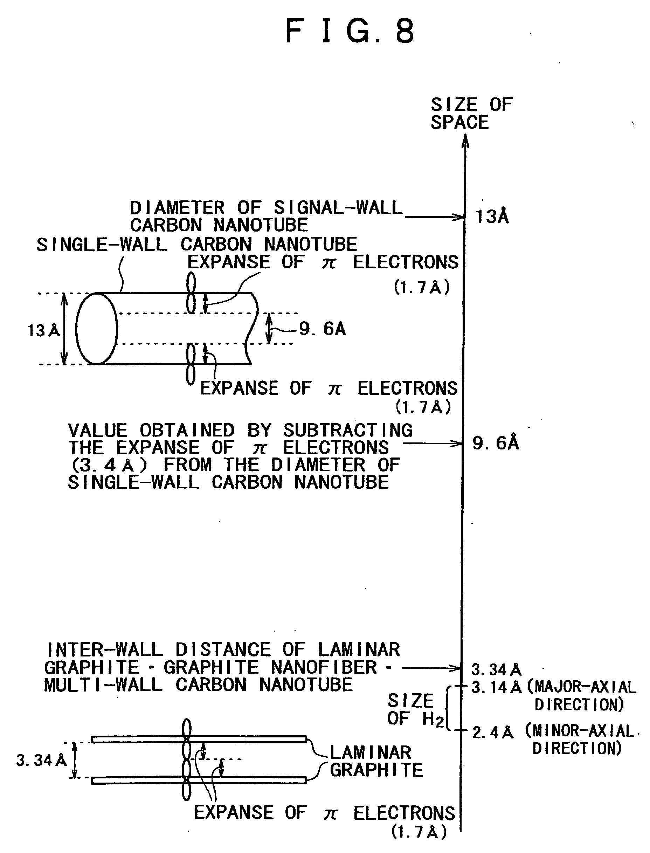

Fig. 8 shows the sizes of spaces possessed by a single-wall carbon nanotube, laminar graphite, a graphite nanofiber (GNF), and a multi-wall carbon nanotube (MWNT) in the order of size. Specifically, Fig. 8 reflects the results that occlusion of hydrogen gas into a typical single-wall carbon nanotube having a space size of 13 to 14 Å has not yet been succeeded, and that inclusion of hydrogen gas into inter-wall spaces of the laminar graphite, the graphite nanofiber (GNF) and the multi-wall carbon nanotube (MWNT) having a space size of not more than 3.34 Å has also not been succeeded yet.

As shown in Fig. 8, the inter-atomic distance of a hydrogen molecule is 0.074 mm, and, in consideration of the van der Waals radius of the atoms, the size of the hydrogen molecule is 2.4 Å in the minor-axial direction and 3.14 Å in the major-axial direction. In addition, the inter-wall distance of the laminar graphite, the graphite nanofiber and the multi-wall carbon nanotube is 3.34 Å; therefore, it seems that the hydrogen atom can enter into the inter-wall distance. In practice, however, the expanse of π electrons possessed by the laminar graphite and the like is 1.7 Å per wall, so that the inter-wall distance of 3.34 Å is completely plugged up by the expanse of π electrons (since there are contributions of π electrons from both the upper side and the lower side of the wall, the total expanse of π electrons is 3.4 Å), and the hydrogen atom cannot enter into the inter-wall distance.

On the other hand, the single-wall carbon nanotube conventionally used in experiments of hydrogen occlusion has a diameter of 13 to 14 Å, and, taking into account the 3.4 Å as the expanse of π electrons, the space into which hydrogen can enter is effectively 9.6 to 10.6 Å.

However, the size of this space is about 3 to 5 times the size of the hydrogen molecule, which is too large to expect an interaction between hydrogen and the tube wall surfaces. For example, let's suppose the case of placing glass balls into a rubber hose, for getting an image of the above. Where the section of the rubber hose is much larger than the diameter of the glass ball, it is extremely difficult to retain the glass balls in the hose. The relationship between the carbon nanotube and the hydrogen molecule is considered to correspond to this case.

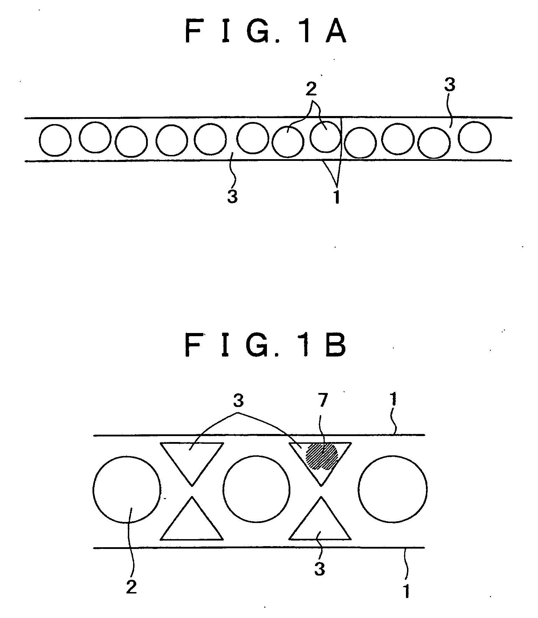

In view of the above, as shown in Fig. 1A, the substance-occluding material according to the present invention has a structure in which a fullerene-based carbon material, for example, C₆₀ 2 as the contained substance is contained in the inside of a single-wall carbon nanotube 1 as the tubular material. This ensures that the space in the single-wall carbon nanotube 1 can be reduced, and movements of the hydrogen molecule in the inside can be greatly restrained. As a result, the substance-occluding material is high in efficiency, is lightweight, inexpensive and safe, and is high in transportability.

Namely, as shown in Fig. 1B which shows an enlarged view of a part of Fig. 1A, the substance-occluding material has a structure in which the fullerene-based carbon material, for example, C₆₀ 2 as the contained substance is contained in the inside of the single-wall carbon nanotube 1 as the tubular material, so that, for example, hydrogen gas as the substance to be occluded can be efficiently occluded in space portions 3 formed between the single-wall carbon nanotube 1 and C₆₀ 2. In this case, the fullerene-based carbon material, for example, C₆₀ 2 as the contained substance may be polymerized in the inside of the carbon nanotube 1.

Since the diameter of the carbon nanotube is 13 to 14 Å and the diameter of C₆₀ is 7.1 Å, the space into which the hydrogen atom is expected to enter is not plugged up, even taking into account the expanse of π electrons. Where a so-called higher-order fullerene such as C₇₀ and C₈₀ is to be contained in the carbon nanotube, the containing can be realized in the same manner as in the case of C₆₀, by enlarging the diameter of the nanotube. Besides, this applies also to metal-containing fullerenes.

It is possible to earn more of wt% of occluded hydrogen where the carbon nanotube is a single-wall one than where the carbon nanotube is a multi-wall one; however, it is possible to realize the above effect without any trouble even in the case of the multi-wall carbon nanotube.

The nearest inter-atomic distance d between the tubular material and the contained substance is desirably in the range of 3.4 Å ≦ d ≦ 13 Å. As mentioned above, taking into account the 3.4 Å as the expanse of π electrons, the lower limit of d is preferably 3.4 Å. Although 3.4 Å is not sufficient for the space into which the hydrogen molecules enter, a phenomenon has been observed in which the space is expanded by intrusion of oxygen or nitrogen (A. Fujiwara et al. Chem. Phys. Lett. published), so that a similar phenomenon can be expected to occur in the case of hydrogen. As for the upper limit of d, the ability of occlusion cannot be expected unless the upper limit is 13 Å or below, since it is difficult to achieve occlusion with the ordinary nanotube size. More preferably, 3.4 Å < d < 13 Å. Further preferably, the lower limit of d is 3.4 + 2.4 = 5.8 Å (2.4 Å is the size in the minor-axial direction of the hydrogen molecule).

The substance in which the fullerene is contained in the carbon nanotube in a high density, like the substance-occluding material according to the present invention, is generally called "peapod", and synthesis thereof has already been established (B.W. Smith et al., Nature 396 (1998), 323 and H. Kataura, Synth. Metals, in press).

One example of the method of synthesizing the peapod will be shown as follows.

First, the nanotube having a diameter optimum for containing the fullerene therein is synthesized. By use of the nanotube thus synthesized, a high-purity holed nanotube is prepared, from which a high-purity peapod can be synthesized.

In the case of a laser vapor deposition method, it is possible to control the diameter distribution of the nanotube produced, by regulating the kind of a catalyst and the temperature in an electric furnace. The diameter of the nanotube suitable for containing the fullerene therein is about (10, 10), namely, 1.38 nm. For production of the nanotube having this diameter, an Ni-Co-based alloy catalyst is most suitable. In addition, the nanotube using this catalyst has the merit that it can be easily purified to a high purity. Since the reaction is carried out at a high temperature at the time of producing the peapod, if metal particulates are left in the specimen, they would decompose the fullerene in the reaction process because of the catalytic action thereof. Therefore, it is very important to remove the metal catalyst present in the specimen. Parameters for synthesis of the nanotube here are given below.
Target: Ni/Co (0.45/0.45 at.%) catalyst-containing graphite target
Atmospheric gas: argon, 500 Torr
Furnace temperature: 1250°C
Laser output: 300 mJ/pulse (10 Hz)
Laser spot size: 5 mm

The content of the nanotube in unpurified soot produced under the above conditions is about 60 to 70%. The soot is purified by a hydrogen peroxide reflux method, whereby a high-purity nanotube can be obtained. Incidentally, in this purification process, the 5-membered rings forming both ends of the nanotube are decomposed, whereby fault portions are generated at both ends of the nanotube, to give a tubular or straw-shaped holed nanotube.

Next, containing of the fullerene is carried out by evaporating the fullerene. The high-purity holed nanotubes and the isolated purified fullerene, for example, C₆₀ are sealed in a quarts pipe under high vacuum, and the specimen is then maintained at a temperature of 650°C for 2 to 6 hr. At this temperature, the fullerene is sublimed, and enter into the nanotubes through the fault portions formed in the purification process. After the reaction, the specimen is subjected to ultrasonic cleaning in toluene, to remove the fullerene adhered to the outside surface of the nanotubes. As a result, C₆₀ is inserted in almost all of the nanotubes in a high density. Besides, the peapod can also be produced in the same manner by use of other fullerenes such as C₇₀.

The substance-occluding material according to the present invention preferably contains a catalytic metal, and, further, the contained substance also preferably contains the catalytic metal. The content of the catalytic metal in weight percentage is preferably not more than 10 wt%, and the catalytic metal is desirably constituted of a metallic material having a catalytic ability for decomposing hydrogen molecules into hydrogen atoms. Examples of such catalytic metal include Cr, Mn, Fe, Co, Ni, Cu, Zn, Pd, and Pt. With the catalytic metal contained in the substance-occluding material, the hydrogen molecules can be decomposed into hydrogen atoms as above-mentioned, whereby the size of hydrogen can be reduced to about one half of the original size, hydrogen can be occluded in narrower spaces, and further efficient occlusion can be achieved (this applies also to the inventions described later).

In addition, the present invention pertains to a substance-occluding material in which the tubular materials or the rod-like materials are bundled densely to form a bundle structure, and a substance to be occluded is occluded between the tubular or rod-like materials (this will hereinafter be referred to as the second-named invention of the present invention).

According to the present invention, the tubular materials or the rod-like materials are bundled densely to form the bundle structure, and the substance to be occluded is occluded between the tubular or rod-like materials, whereby it is possible to provide a substance-occluding material which is high in efficiency, is lightweight, inexpensive and safe, and is high in transportability.

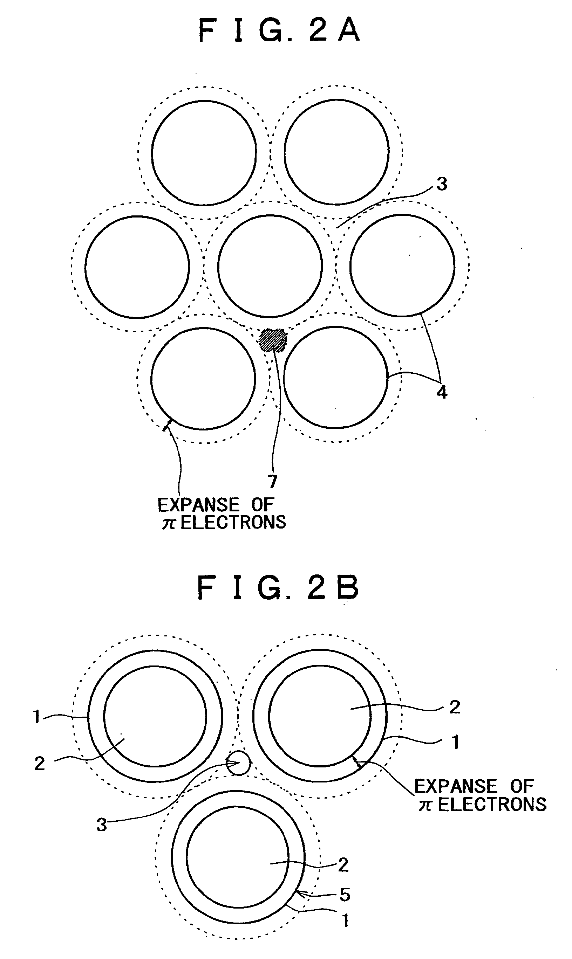

The state of the bundle structure can be maintained by the fan der Waals interaction, and, as shown in Fig. 2A, space portions 3 for occlusion of, for example, hydrogen gas as the substance to be occluded are formed between the tubular or rod-like materials 4. Since the size of the space portions 3 can be made to be roughly the same with the size of the substance to be occluded, movements of the substance to be occluded are greatly restrained, and further efficient occlusion can be achieved.

The nearest inter-atomic distance d' in the space portions 3 is preferably in the range of 4 Å ≦ d' ≦ 13 Å, for the same reason as in the above first-named invention.

The tubular material is preferably composed of a carbon nanotube, and the carbon nanotube is particularly preferably a single-wall carbon nanotube. As the rod-like material, a carbon nanofiber is preferably used.

In addition, the tubular material may have the bundle structure, a substance or substances different from the substance to be occluded may be contained in the inside of the tubular material, and the substance to be occluded may be occluded also in the inside of the tubular material.

Namely, as shown in Fig. 2B, the substance-occluding material according to the present invention may be composed, for example, of the above-mentioned peapod 5 having a structure in which the fullerene-based carbon material, for example, C₆₀ as the contained substance is contained in the inside of the carbon nanotube as the tubular material. This ensures that the substance to be occluded, for example, hydrogen gas is occluded in the space portions 3 between the carbon nanotubes 1 formed by the bundle structure, and the substance to be occluded can be occluded also in space portions (not shown) formed inside the peapod 5, whereby further efficient occlusion can be realized.

In this case, on the same ground as in the above first-named invention, the nearest inter-atomic distance d between the tubular material such as the carbon nanotube and the contained substance such as the fullerene-based carbon material is preferably in the range of 3.4 Å ≦ d ≦ 13 Å.

Furthermore, the present invention pertains to a substance-occluding material in which a tubular material has a multi-wall structure and a space portion for occlusion of a substance to be occluded is formed on the innermost side of the structure (this will hereinafter be referred to as the third-named invention of the present invention).

According to the present invention, the tubular material has the multi-wall structure, and the space portion for occlusion of the substance to be occluded is formed on the innermost side of the structure; so that it is possible to provide a substance-occluding material which is high in efficiency, is lightweight, inexpensive and safe, and is high in transportability.

The diameter D of the space portion is preferably in the range of 3.4 Å ≦ D, and more preferably 3.4 Å < D. In addition, the tubular material preferably forms a double-wall carbon nanotube.

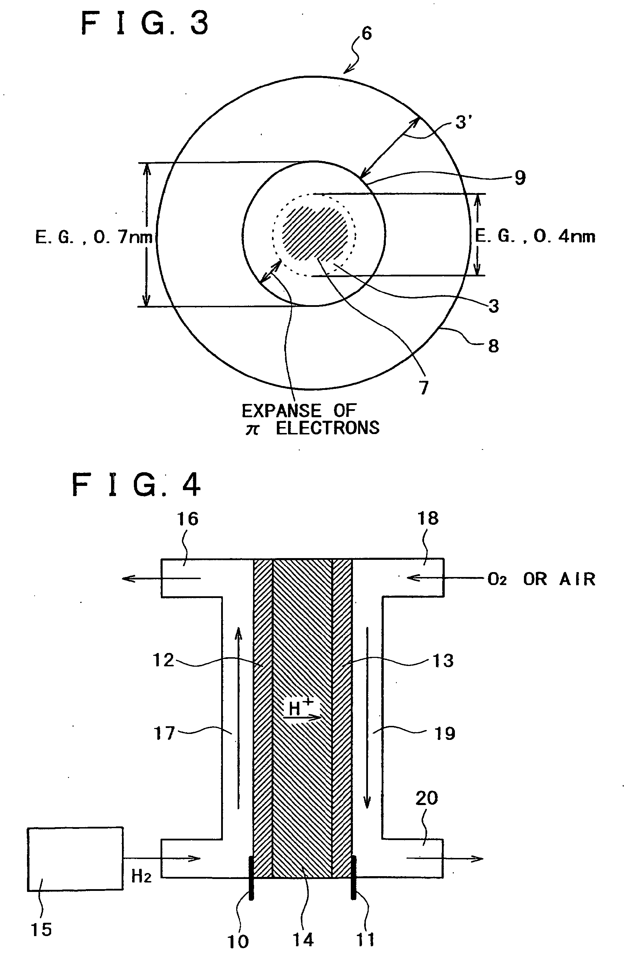

Fig. 3 shows an enlarged general sectional view of a substance-occluding material according to the present invention, in the case of applying a double-wall carbon nanotube as the tubular material. The double-wall carbon nanotube 6 can be synthesized by a method in which the above-mentioned peapod is heat treated, whereby C₆₀ in the inside of the carbon nanotube is decomposed, and a new small-diameter tube is formed on the inner side of a single-wall carbon nanotube.

As shown in Fig. 3, the size of the space portion 3 formed on the innermost side of the multi-wall structure can be made to be roughly the same as the size of the hydrogen molecule 7 as the substance to be occluded, so that movements of the hydrogen molecule 7 are greatly restrained, and further efficient occlusion can be achieved.

In addition, as in the above second-named invention, the double-wall carbon nanotubes as the tubular material may be bundled densely to form a bundle structure.

In this case, the hydrogen molecules 7 as the substance to be occluded can be occluded in the space portion 3 formed on the innermost side of the multi-wall structure, and, simultaneously, the substance to be occluded can be occluded also in the space portions formed between the tubular materials, whereby further efficient occlusion can be realized.

Furthermore, as shown in Fig. 3, the hydrogen molecules 7 as the substance to be occluded can be occluded in the space portion 3 formed on the innermost side of the multi-wall structure, and, simultaneously, the hydrogen molecules 7 as the substance to be occluded can be occluded also in a space portion 3' formed between the first wall 8 and the second wall 9, whereby further efficient occlusion can be realized. In this case, the space portion 3' may be filled with the above-mentioned contained substance such as the fullerene-based carbon material.

In producing the substance-occluding materials according to the first-named to third-named inventions of the present invention, there is a step of treating these substance-occluding materials with a base, particularly, dispersed in an alkaline solution.

It is considered that impurity components such as hydrocarbon components are produced upon an oxidizing treatment introduced into a purification process of the substance-occluding material according to the present invention composed of a carbon nanotube or the like, upon an acid solution treatment for removal of a catalytic metal and the like, and that the hydrocarbon components adhere to wall surfaces of the substance-occluding material. Where the hydrocarbon components are left adhering to the wall surfaces, the space portions intrinsically capable of occluding the substance to be occluded may be filled with the hydrocarbon components, and the space size (3.4 Å ≦ d or d' ≦ 13 Å, or 3.4 ≦ D) preferable for occlusion of the substance to be occluded may not be obtained.

Such hydrocarbon components, however, are effectively removed by the alkali treatment according to the present invention, and, for example, the substance-occluding material constantly shows cleaned wall surfaces. Therefore, spaces preferable for occlusion of substance can be secured.

It is preferable to use NaOH or KOH as the alkaline solution, and to conduct an ultrasonic treatment in the alkaline solution. The ultrasonic treatment has the effect of promoting the osmosis of the alkaline solution to the hydrocarbon components adhering to the wall surfaces of the substance-occluding material according to the present invention, thereby making it possible to finish the alkali treatment step in a short time. The period of time of the ultrasonic treatment is preferably not less than 10 min, and more preferably not less than 1 hr.

In addition, it suffices for the alkaline solution to be alkaline, and the alkaline solution is desirably a solution which preferably has a pH in the range of 9 to 12. In this case, damage to the substance-occluding material according to the present invention is very slight, and, simultaneously, effective removal of the impurity components can be achieved.

Where the substance-occluding materials according to the first-named to third-named inventions of the present invention are applied as hydrogen-occluding materials, hydrogen gas (hydrogen molecules or hydrogen atoms) can be occluded by pressurization, and the hydrogen gas (hydrogen molecules or hydrogen atoms) can be released by decompression. As will be described later, the substance-occluding materials are materials which can be applied to electrochemical devices such as fuel cells, can be preferably used for transportation of hydrogen gas, are inexpensive, lightweight and highly safe, and can be' used semi-permanently.

The substance-occluding materials according to the first-named to third-named inventions of the present inventions can be preferably used for a variety of electrochemical devices. Specifically, in an apparatus having a basic structure comprised of a first electrode, a second electrode, and a proton conductor clamped between the electrodes, a hydrogen gas supply portion is provided on the side of the first electrode, hydrogen gas being supplied from the hydrogen gas supply portion, and oxygen or an oxygen-containing gas is supplied to the side of the second electrode, wherein a hydrogen-occluding material as a substance-occluding material according to any one of the first-named to third-named inventions of the present invention is used in the hydrogen gas supply portion. Therefore, the hydrogen gas is supplied efficiently, and a good output characteristic can be obtained.

Examples of the proton conductor include general Nafion and fullerene derivatives such as fullerenol (polyfullerene hydroxide). Proton conductors using these fullerene derivatives are described in WO 01/06519.

Synthesis example of a fullerenol having a structure in which a plurality of hydroxyl groups are added to a fullerene molecule was first reported by Chiang et al in 1992 (Chiang, L.Y.; Swirczewski, J.W.; Hsu, C.S.; Chowdhury, S.K.; Cameron, S.; Creegan, K., J. Chem. Soc., Chem. Commun. 1992, 1791).

Where those fullerenols are, for example, aggregated so as to generate an interaction between the hydroxyl groups of the fullerenol molecules proximate to each other, the aggregate as a macroscopic aggregate can display a high proton conduction characteristic (in other words, a property for dissociation of H⁺ from the phenolic hydroxyl groups of the fullerenol molecule).

According to the present embodiment, other than the above-mentioned fullerenols, an aggregate of fullerenes having a plurality of -OSO₃H groups, for example, can also be used as the proton conductor. A polyfullerene hydroxide in which the OH groups are replaced by OSO₃H groups, namely, an esterified fullerenol hydrogensulfate was also reported by Chiang et al in 1994 (Chiang. L.Y.; Wang, L.Y.; Swirczewski, J.W.; Soled, S.; Cameron, S., J. Org. Chem. 1994, 59, 3960). The esterified fulluerene hydrogensulfate can contain only the OSO₃H groups in one molecule thereof, or can contain pluralities of OSO₃H groups and hydroxyl groups.

When a multiplicity of the above-mentioned fullerenols and esterified fullerenol hydrogensulfates are aggregated, the proton conductivity displayed by the aggregate as bulk has such a property that the protons arising from the large amounts of hydroxyl groups and OSO₃H groups initially contained in the molecule relates directly to movement. With such an aggregate, therefore, it is unnecessary to take in hydrogen or protons arising from water vapor molecules or the like from the atmosphere, it is unnecessary to replenish moisture from the exterior, particularly, to absorb moisture or the like from the atmospheric air, and there is no restriction as to atmosphere. Accordingly, the aggregate can be used continuedly, even in a dry atmosphere.

In addition, the fullerene constituting a base of these molecules particularly has an electrophilic property, which is considered to contribute greatly to promotion of the dissociation of hydrogen ions not only in the OSO₃H groups having high acidity but also in the hydroxyl groups and the like, leading to an excellent proton conductivity. Besides, since comparatively large amounts of hydroxyl groups and OSO₃H groups and the like' can be introduced into one fullerene molecule, the number density of the protons relating to conduction per unit volume of the conductor is very high, with the result that an effective conductivity is displayed.

The above-mentioned fullerenols and esterified fullerenol hydrogensulfates are each composed mostly of the carbon atoms of fullerenol, so that they are light in weight, are less liable to be denatured, and contain no pollutant. The production cost of fullerenes is being lowered rapidly. From resource, environmental and economic points of view, fullerenes are more ideal carbonaceous materials than any other material.

Furthermore, fullerene molecules containing any of -COOH, -SO₃H, and -OPO(OH)₂, other than the above-mentioned -OH and -OSO₃H, for example, can also be used.

In order to synthesize the fullerenol or the like which can be used in the present embodiment, an appropriate combination of known treatments such as, for example, acid treatment and hydrolysis to a powder of fullerene molecules, whereby desired groups can be introduced to constituent carbon atoms of the fullerene molecules.

Here, in the case where the above-mentioned fullerene derivative is used as the proton conductor, it is preferable that the proton conductor is substantially constituted only of the fullerene derivative, or is bound by a binder.

Now, an example in which an electrochemical device according to the present invention is configured as a fuel cell by use of a proton conductor substantially composed only of the above-mentioned fullerene derivative will be described below.

Fig. 4 shows an example in which an electrochemical device according to the present invention is configured as a fuel cell. As shown in Fig. 4, the fuel cell comprises a negative electrode (fuel electrode or hydrogen electrode) 12 and a positive electrode (oxygen electrode) 13 fitted respectively with terminals 10 and 11, to or in which catalysts are respectively adhered or dispersed and which are opposed to each other, and a proton conductor 14 clamped between both the electrodes. In use of the fuel cell, hydrogen is supplied from a hydrogen gas supply portion 15 and discharged through a discharge port 16 (which may be omitted), on the side of the negative electrode 12. A fuel (H₂) generates protons while passing through a conduit 17. The protons, together with protons generated from the proton conductor 14, move to the side of the positive electrode 13, where they react with oxygen (air) supplied through an inlet port 18 into a conduit 19 and flowing toward a discharge port 20, whereby a desired electromotive force is taken out.

In such a fuel-cell, a hydrogen-occluding material as one of the substance-occluding materials according to the first-named to third-named inventions of the present invention is used in the hydrogen gas supply portion 15, so that hydrogen gas is supplied efficiently, and a good output characteristic is obtained.

In addition, while hydrogen ions are dissociated in the negative electrode 12 and hydrogen ions are dissociated at the proton conductor 14, the hydrogen ions supplied from the side of the negative electrode 12 move to the side of the positive electrode 13, resulting in the characteristic feature of a high conductivity of the hydrogen ions. Therefore, there is no need for a humidifier or the like, so that it is possible to simplify the system, to reduce the weight of the system, and to enhance electrode functions such as density of electricity and output characteristic.

Incidentally, a fullerene derivative bound by a binder may be used as a proton conductor, in place of the proton conductor which consists only of a film-shaped fullerene derivative obtained by pressure forming of the above-mentioned fullerene derivative and which is clamped between the first electrode and the second electrode. In this case, binding by use of the binder makes it possible to form a proton conductor having a sufficient strength.

Here, as a polymeric material which can be used as the binder, one or more of known film-forming polymers may be used. The content of the polymeric material in the proton conductor 14 is normally limited to 20 wt% or below. This is because the conductivity of hydrogen ions may be lowered when the content exceeds 20 wt%.

The proton conductor constituted as above also contains the fullerene derivative as the proton conductor, so that it can display hydrogen ion conductivity in the same manner as the above-mentioned proton conductor substantially composed only of the fullerene derivative.

Moreover, unlike the proton conductor composed solely of the fullerene derivative, the present proton conductor is given a film-forming property arising from the polymeric material. Therefore, the present proton conductor has a higher strength, as compared with the proton conductor obtained by compression molding of a powder of the fullerene derivative, and can be used as a soft ion-conductive thin film (normally 300 µm or below in thickness) having a gas permeation preventive ability.

Incidentally, the polymeric material is not particularly limited inasmuch as it substantially does not hinder hydrogen ion conductivity (by reaction with the fullerene derivative) and it has a film-forming property. Normally, a polymeric material being free of electron conductivity and having good stability is used. Examples of the polymeric material which can be used include polyfluoroethylene, polyvinylidene fluoride, and polyvinyl alcohol. These are preferable polymeric materials, also for the following reasons.

First, polyfluoroethylene is preferable because it can be easily formed into a thin film having a higher strength by using a smaller content thereof, as compared with other polymeric materials. In this case, the content of polyfluoroethylene in the proton conductor 14 is as small as 3 wt% or below, preferably 0.5 to 1.5 wt%, and the thickness of the thin film can be as small as normally 100 µm to 1 µm.

Second, polyvinylidene fluoride and polyvinyl alcohol are preferable because they provide ion-conductive thin films having a more excellent gas permeation preventive ability. In this case, the content of polyvinylidene fluoride or polyvinyl alcohol in the proton conductor 14 is preferably in the range of 5 to 15 wt%.

In the case of the polyfluoroethylene and in the cases of polyvinylidene fluoride and polyvinyl alcohol, the film-forming property may be adversely affected when the content of the polymeric material is below the lower limit of the above-mentioned range relevant thereto.

In order to obtain a thin film of the proton conductor in which the fullerene derivative is bound by a binder in the present embodiment, a known film-forming method such as pressure molding and extrusion molding may be used.

In addition, in the electrochemical device according to the present embodiment, the proton conductor is not particularly limited, and any one that has ion (hydrogen ion) conductivity can be used. Examples of the usable proton conductors include fullerene hydroxides, esteified fullerenol sulfates, and Nafion.

Now, the present invention will be described in detail based on Examples.

### Example 1

First, by use of a laser vapor deposition method, carbon nanotubes having a diameter of about (10, 10) were synthesized by controlling the diameter distribution of the carbon nanotubes through regulating the kind of catalyst and the temperature of an electric furnace. As the catalyst, an Ni-Co alloy catalyst was used.
Parameters in synthesis of the carbon nanotubes are given below.
Target: Ni/Co (0.45/0.45 at.%) catalyst-containing graphite target
Atmospheric gas: argon, 500 Torr
Furnace temperature: 1250°C
Laser output: 300 mJ/pulse (10 Hz)
Laser spot size: 5 mm

The nanotube content in unpurified soot produced under the above conditions was about 60 to 70%. The soot was purified by a hydrogen peroxide reflux method, whereby high-purity nanotubes could be obtained. Incidentally, the 5-membered rings forming both ends of the nanotubes were decomposed during the purification process, whereby fault portions were generated at both ends of the nanotubes, and tubular or straw-shaped holed nanotubes were formed.

Next, containing of fullerene was conducted by evaporating the fullerene. The high-purity holed nanotubes and the isolated and purified fullerene, for example, C₆₀ were sealed in a quartz pipe under high vacuum, and the assembly was heated at a temperature of 650°C for 2 to 6 hr. At this temperature, the fullerene was sublimed, and entered into the inside of the nanotubes through the fault portions formed in the purification process. After the reaction, the specimen was subjected to ultrasonic cleaning in toluene, to remove the fullerene adhered to the outside surfaces of the nanotubes. This resulted in that C₆₀ was inserted in almost all the nanotubes in a high density.

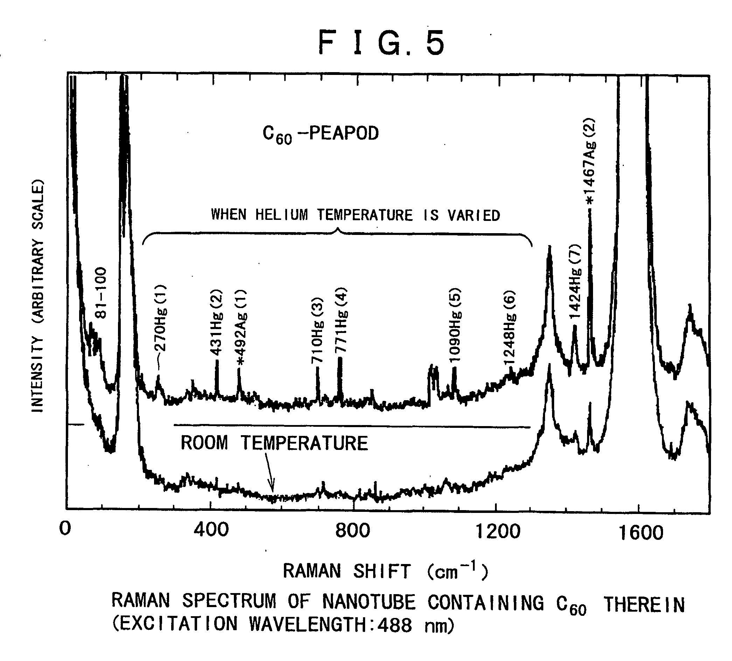

A Raman spectrum of the peapods thus obtained is shown in Fig. 5.

In the figure, the upper line is the spectrum at a liquid helium temperature, and the lower line is the spectrum at room temperature. Incidentally, the specimen was annealed at 450°C in vacuum in a dark place, before cooling. A cryostat of the gas flow type was used to cool the specimen directly with liquid helium. At the liquid helium temperature, variation of spectrum due to irradiation with laser beam was not observed, and all the Raman activity modes of C₆₀ molecules were observed. In careful observation, however, a plurality of peaks irrelevant to C₆₀ molecules were observed in a low wave number region of 85 to 100 cm⁻¹. From the frequencies of the peaks, the peaks are considered to be external vibration modes, and were identified to be similar to the external vibration mode of C₆₀ dimer (C₁₂₀) reported at 96 cm⁻¹. Looking at the intermolecular vibration mode, it is seen that two Ag modes are relatively much weaker than those of an fcc crystal, and the frequency is lower by a few cm-¹. While it is known that the Hg(1) mode is sensitive to variations in the symmetry of the molecule and is split into three lines by dimerization, the Hg (1) mode observed showed a broadening corresponding thereto. These features seen in the Raman spectrum strongly implies that C₆₀ in the nanotubes were assuming a dimer or trimer to tetramer structure. It may be considered that the irradiation with laser at the liquid helium temperature is the cause of the dimerization. However, in view of the fact that a streak indicating the presence of the dimer is already observed in electron beam diffraction at room temperature, it is natural to consider that the dimer and oligomers had already been formed at the time of preparation of the specimen.

When the temperature of the specimen was raised to room temperature and the Raman spectrum was again observed in vacuum, most of the spectrum intensities arising from the C₆₀ molecule were lost instantaneously, resulting in that only the two Raman peaks at 1424 and 1467 cm⁻¹ were observed. The spectrum well resembled the Raman spectrum of an orthorhombic polymer phase C₆₀ prepared by high-temperature high-pressure synthesis. Since the orthorhombic phase is composed of an aggregate of linear polymers of C₆₀, it is considered that the C₆₀ in the nanotubes formed the linear polymers upon irradiation with laser beam.

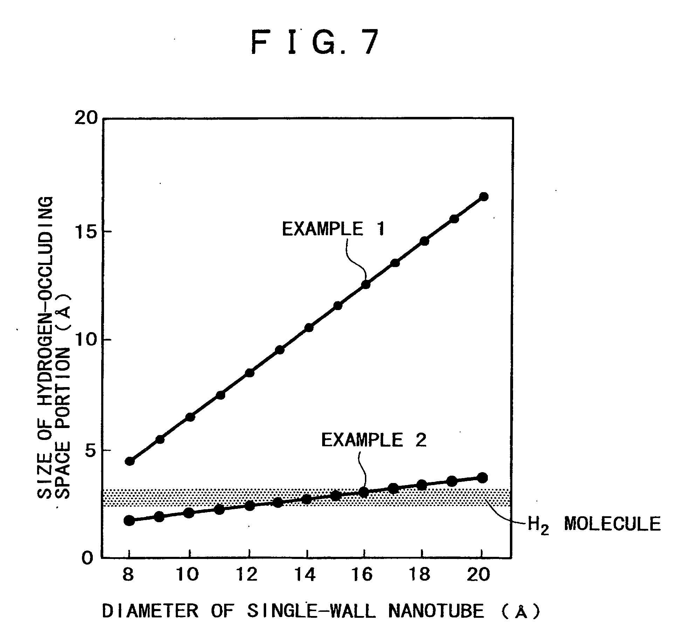

The hydrogen-occluding ability of the peapods obtained above was determined, to be 2 wt% at room temperature under a hydrogen pressure of 80 atm. In addition, as shown in Fig. 7, it is seen that as the diameter of the peapods increases, the size of spaces in the inside of the peapod which can occlude the substance to be occluded such as hydrogen gas also increases rapidly.

### Example 2

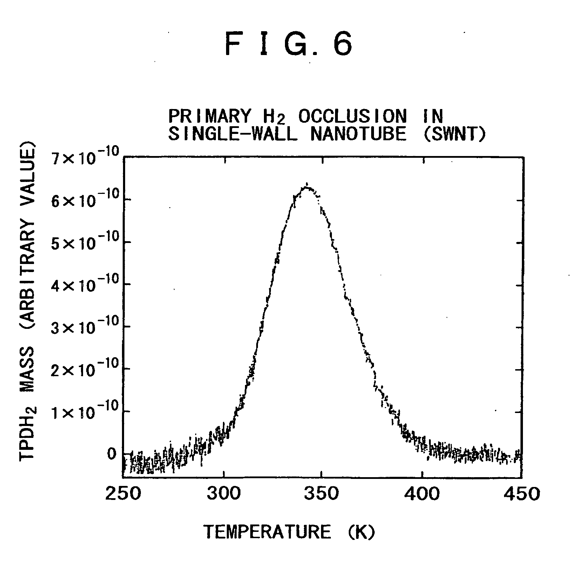

In the process of purifying the carbon nanotubes obtained above, a specimen bundled in high density was prepared. Where the specimen had the bundle structure, as shown in Fig. 7, when the diameter of the carbon nanotubes is increased, the size of spaces between the nanotubes which can occlude the substance to be occluded such as hydrogen gas was not varied so rapidly as in the case of the peapods. Besides, as shown in Fig. 6, the hydrogen release peak of the specimen was observed at around 350 K, and the hydrogen-occluding ability was about 1 wt%.

### Example 3

When peapods prepared by the same method as in Example 1 were heated to about 1000°C in vacuum, the C₆₀ in single-wall carbon nanotubes was decomposed to become tubular, and to form double-wall carbon nanotubes. The hydrogen-occluding ability of the double-wall carbon nanotubes was measured, to be 0.6 wt%.

### Example 4

Materials containing Pt as a catalyst metal mixed into the specimens obtained in Examples 1, 2, and 3 were prepared. Mixing of Pt into the specimens was conducted, for example, by dispersing Pt and a carrier material into ethanol, followed by irradiating with ultrasonic waves.

When the hydrogen-occluding ability of each of the specimens was measured, it was confirmed that the hydrogen-occluding ability was raised by about 0.2 wt% on average. In addition, even where Pt was replaced by other metal, the rise in the hydrogen-occluding ability on average was roughly the same as above.

### Example 5

A fuel cell as shown in Fig. 4 was produced. First, a hydrogen electrode and an oxygen electrode fitted with a Pt catalyst were prepared respectively, a plastic-made mask is put on the oxygen electrode, and a mixed liquid of a polyfullerene hydroxide hydrogensulfat ester and polyvinyl chloride was dripped thereon and uniformly spread in the mask. Thereafter, the assembly was dried at room temperature, and the mask was removed. A hydrogen electrode was placed on the assembly, and the resulting assembly was pressed under a pressure of about 5 t/cm². Next, a hydrogen gas supply portion formed by applying the peapods prepared in Example 1 was disposed on the side of the hydrogen electrode, to obtain a structure for supplying hydrogen gas from the hydrogen gas supply portion by decompression, and a cell having a proton conduction film was completed. The fuel cell thus obtained was subjected to a power generation test under the following conditions.

Namely, the quantity of supply of hydrogen from the hydrogen gas supply portion formed by application of the peapods prepared in Example 1 to the hydrogen electrode was set at 10 cc/min, and the oxygen electrode was opened to the atmospheric air. As a result, an electromotive force of 1.2 V could be obtained.

### Comparative Example

For a single-wall carbon nanotubes not provided with a bundle structure and not containing fullerene molecules therein, the hydrogen-occluding ability was measured, to be 0.1 wt% at room temperature under a hydrogen pressure of 80 atm. The hydrogen-occluding ability was lower than any of those obtained in Examples 1 to 4.

### Example 6

In the process of purifying carbon nanotubes, the nanotubes were dispersed in an NaOH solution, whereby pasty hydrocarbon components adhering to wall surfaces of the nanotubes were removed.

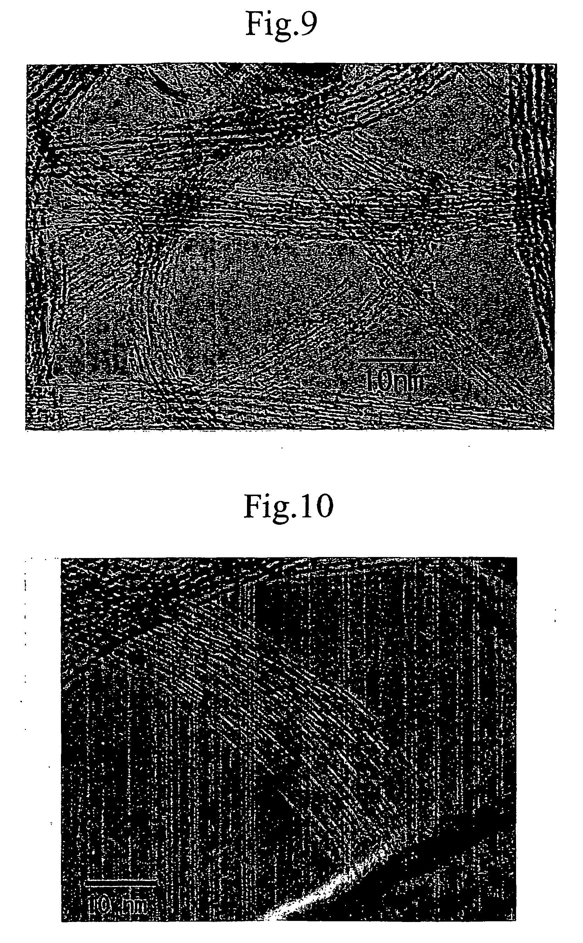

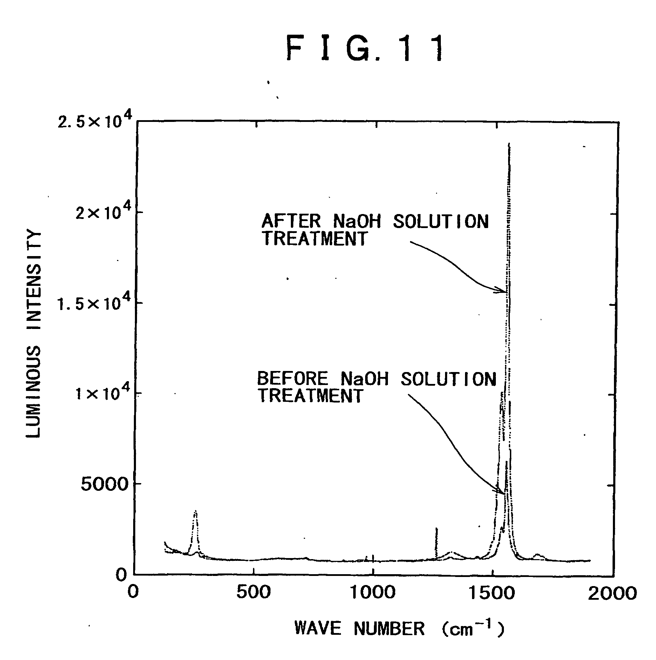

Fig. 9 shows a TEM photograph of the specimen before the treatment with the NaOH solution, and Fig. 10 is a TEM photograph of the specimen after the treatment. In addition, Fig. 11 shows a graph showing a Raman spectrometric evaluation.

Fig. 9 shows the condition where the hydrocarbon components are seen in streak form, while Fig. 10 shows the condition where the streak-formed portions have been greatly reduced. This shows that by the treatment with a base such as an NaOH solution, the hydrocarbon components adhering to wall surfaces of the nanotubes were removed, and a dense bundle structure, for example, could be formed.

Besides, as is clear from Fig. 11, a high peak was obtained after the treatment with the NaOH solution. The high peak is due to the carbon atoms of the nanotubes free of the hydrocarbon components, and indicates that the hydrocarbon components adhering to the wall surfaces of the nanotubes were removed by the treatment with a base such as the NaOH solution.

As is clear from the foregoing, according to the first-named invention of the present invention, the substance different from the substance to be occluded is contained in the inside of the tubular material, so that it is possible to provide a substance-occluding material which is high in efficiency, is lightweight, inexpensive and safe, and is high in transportability.

In addition, according to the second-named invention of the present invention, the tubular materials or the rod-like materials are densely bundled to form a bundle structure, and the substance to be occluded is occluded between the tubular or rod-like materials, so that it is possible to provide a substance-occluding material which is high in efficiency, is lightweight, inexpensive and safe, and is high in transportability.

Specifically, space portions for occluding the substance to be occluded are formed between the tubular or rod-like materials, and the size of the space portions can be made to be roughly the same with the size of the substance to be occluded, so that movements of the substance to be occluded are greatly restrained, and further efficient occlusion can be achieved.

Furthermore, according to the third-named invention of the present invention, a tubular material has a muti-wall structure, and a space portion for occluding a substance to be occluded is formed on the innermost side of the structure, so that it is possible to provide a substance-occluding material which is high in efficiency, is lightweight, inexpensive and safe, and is high in transportability.

Specifically, the size of the space portion can be made to be roughly the same with the size of the substance to be occluded, so that movements of the substance to be occluded are greatly restrained, and further efficient occlusion can be achieved.

In addition, according to the method of producing the substance-occluding materials according to the first-named to third-named inventions of the present invention, there is provided a step of treating the substance-occluding material with a base, so that impurity components such as hydrocarbon components adhering to the wall surfaces of the substance-occluding material can be removed effectively, and a high-performance substance-occluding material can be produced efficiently.

Besides, the electrochemical device according to the present invention has a basic structure comprised of a first electrode, a second electrode, and a proton conductor clamped between both the electrodes, wherein a hydrogen gas supply portion is provided on the side of the first electrode, hydrogen gas is supplied from the hydrogen gas supply portion, oxygen or an oxygen-containing gas is supplied to the side of the second electrode, and a hydrogen-occluding material as one of substance-occluding materials according to the first-named to third-named inventions of the present invention is used in the hydrogen gas supply portion, so that the hydrogen gas is supplied efficiently, and a good output characteristic is obtained.

## Claims

1. A substance-occluding material wherein a substance different from a substance to be occluded is contained in the inside of a tubular material.

2. A substance-occluding material as set forth in claim 1, wherein said substance to be occluded is occluded in a space portion formed between said tubular material and said contained substance.

3. A substance-occluding material as set forth in claim 1, wherein the nearest inter-atomic distance d between said tubular material and said contained substance is in the range of 3.4 Å ≦ d ≤13 Å.

4. A substance-occluding material as set forth in claim 1, containing a catalyst metal.

5. A substance-occluding material as set forth in claim 4, wherein said catalyst metal is contained in said contained substance.

6. A substance-occluding material as set forth in claim 4, wherein the content of said catalyst metal in weight percentage is not more than 10% by weight.

7. A substance-occluding material as set forth in claim 4, wherein said catalyst metal is comprised of a metallic material having a catalytic ability for decomposing hydrogen molecules into hydrogen atoms.

8. A substance-occluding material as set forth in claim 7, wherein said catalyst metal is comprised of at least one selected from the.group consisting of Cr, Mn, Fe, Co, Ni, Cu, Zn, Pd, and Pt.

9. A substance-occluding material as set forth in claim 1, wherein said tubular material is composed of a carbon nanotube.

10. A substance-occluding material as set forth in claim 9, wherein said carbon nanotube is a single-wall carbon nanotube.

11. A substance-occluding material as set forth in claim 1, wherein said contained substance is a fullerene-based carbon material.

12. A substance-occluding material as set forth in claim 11, wherein said fullerene-based carbon material is comprised of a shell form carbon cluster molecule Cm (wherein m is a natural number such that Cm can form a shell form structure).

13. A substance-occluding material as set forth in claim 1, wherein said contained material is a material containing carbon atoms such as nanographite.

14. A substance-occluding material as set forth in claim 1, wherein said substance to be occluded is a gas.

15. A substance-occluding material as set forth in claim 14, wherein said gas is at least one selected from the group consisting of hydrogen gas, nitrogen gas, and oxygen gas.

16. A substance-occluding material wherein tubular materials or rod-like materials are densely bundled to form a bundle structure, and a substance to be occluded is occluded between said tubular or rod-like materials.

17. A substance-occluding material as set forth in claim 16, wherein a space portion for occluding said substance to be occluded is formed between said tubular or rod-like materials.

18. A substance-occluding material as set forth in claim 17, wherein the nearest inter-atomic distance d' in said space portion is in the range of 3.4 Å ≦ d' ≦ 13 Å.

19. A substance-occluding material as set forth in claim 16, containing a catalyst metal.

20. A substance-occluding material as set forth in claim 19, wherein said catalyst metal is contained at least between said tubular or rod-like materials.

21. A substance-occluding material as set forth in claim 19, wherein the content of said catalyst metal in weight percentage is not more than 10% by weight.

22. A substance-occluding material as set forth in claim 19, wherein said catalyst metal is comprised of a metallic material having a catalytic ability for decomposing hydrogen molecules into hydrogen atoms.

23. A substance-occluding material as set forth in claim 22, wherein said catalyst metal is at least one selected from the group consisting of Cr, Mn, Fe, Co, Ni, Cu, Zn, Pd, and Pt.

24. A substance-occluding material as set forth in claim 16, wherein said tubular material forms said bundle structure, a substance different from said substance to be occluded is contained in the inside of said tubular material, and said substance to be occluded is occluded also in the inside of said tubular material.

25. A substance-occluding material as set forth in claim 24, wherein said substance to be occluded is occluded also in a space portion formed between said tubular material and said contained substance.

26. A substance-occluding material as set forth in claim 24, wherein the nearest inter-atomic distance d between said tubular material and said contained substance is in the range of 3.4 Å ≦ d ≦ 13 Å.

27. A substance-occluding material as set forth in claim 16, wherein said tubular material is comprised of a carbon nanotube.

28. A substance-occluding material as set forth in claim 16, wherein said rod-like material is comprised of a carbon fiber.

29. A substance-occluding material as set forth in claim 27, wherein said carbon nanotube is a single-wall carbon nanotube.

30. A substance-occluding material as set forth in claim 24, wherein said contained substance is a fullerene-based carbon material.

31. A substance-occluding material as set forth in claim 24, wherein said contained substance contains a catalyst metal.

32. A substance-occluding material as set forth in claim 30, wherein said fullerene-based carbon material is comprised of a shell form carbon cluster molecule Cm (wherein m is a natural number such that Cm can form a shell form structure).

33. A substance-occluding material as set forth in claim 24, wherein said contained substance is a material containing carbon atoms such as nanographite.

34. A substance-occluding material as set forth in claim 16, wherein said substance to be occluded is a gas.

35. A substance-occluding material as set forth in claim 34, wherein said gas is at least one selected from the group consisting of hydrogen gas, nitrogen gas, and oxygen gas.

36. A substance-occluding material wherein a tubular material has a multi-wall structure, and a space portion for occluding a substance to be occluded is formed on the innermost side of said structure.

37. A substance-occluding material as set forth in claim 36, wherein the diameter D of said space portion is in the range of 3.4 Å ≦ D.

38. A substance-occluding material as set forth in claim 36, wherein said tubular material forms a double-wall carbon nanotube.

39. A substance-occluding material as set forth in claim 36, wherein said tubular material has a constitution as set forth in any one of claims 16 to 23.

40. A substance-occluding material as set forth in claim 36, wherein said substance to be occluded is a gas.

41. A substance-occluding material as set forth in claim 40, wherein said gas is at least one selected from the group consisting of hydrogen gas, nitrogen gas, and oxygen gas.

42. A substance-occluding material as set forth in any one of claims 1, 16, and 36, which has been treated with a base.

43. A substance-occluding material as set forth in claim 42, wherein an alkaline solution for use in said treatment has a pH in the range of 9 to 12.

44. A substance-occluding material as set forth in claim 43, wherein NaOH or KOH is used as said alkaline solution.

45. A method of producing a substance-occluding material as set forth in any one of claims 1, 16, and 36, comprising a step of treating said substance-occluding material with a base.

46. A method of producing a substance-occluding material as set forth in claim 45, wherein an ultrasonic treatment is conducted in an alkaline solution.

47. A method of producing a substance-occluding material as set forth in claim 46, wherein said ultrasonic treatment is conducted for not less than 10 minutes.

48. A method of producing a substance-occluding material as set forth in claim 45, wherein an alkaline solution as said base has a pH in the range of 9 to 12.

49. A method of producing a substance-occluding material as set forth in claim 45, wherein NaOH or KOH is used as an alkaline solution as said base.

50. An electrochemical device comprised of a first electrode, a second electrode, and a proton conductor clamped between both said electrodes, said device comprising a hydrogen gas supply portion on the side of said first electrode, hydrogen gas being supplied from said hydrogen gas supply portion, and oxygen or an oxygen-containing gas being supplied to the side of said second electrode, wherein a hydrogen-occluding material as a substance-occluding material as set forth in any one of claims 1, 16, and 36 is used in said hydrogen gas supply portion.

51. An electrochemical device as set forth in claim 50, which is configured as a fuel cell.

52. An electrochemical device as set forth in claim 50, wherein said hydrogen-occluding material has been treated with a base.

53. An electrochemical device as set forth in claim 52, wherein an alkaline solution for use in said treatment has a pH in the range of 9 to 12.

54. An electrochemical device as set forth in claim 53, wherein NaOH or KOH is used as said alkaline solution.
